(19) Europäisches Patentamt
European Patent Office
Office européen des brevets

(11) Publication number: 0 596 518 A2

(12) EUROPEAN PATENT APPLICATION

(21) Application number: 93117970.9

(22) Date of filing: 05.11.93

(51) Int. Cl.5: G06F 15/70

(30) Priority: 06.11.92 JP 296775/92
13.04.93 JP 86103/93

(43) Date of publication of application:
11.05.94 Bulletin 94/19

(84) Designated Contracting States:
DE FR GB IT

(71) Applicant: NIPPON STEEL CORPORATION
6-3, Ohtemachi-2-chome
Chiyoda-ku
Tokyo(JP)

(72) Inventor: Hashimoto, Hiroshi, c/o NIPPON
STEEL CORPORATION
6-3, Ohtemachi-2-chome,
Chiyoda-ku
Tokyo(JP)

(74) Representative: VOSSIUS & PARTNER
Siebertstrasse 4
D-81675 München (DE)

(54) Method of and apparatus for determining data representing 3-dimensional object from perspective view.

(57) A method of and an apparatus for determining data representing a shape of a 3-dimensional object in a 3-dimensional coordinate system on the basis of a perspective view of the object drawn on a first plane, wherein the perspective view, at least two groups of sectional lines of the object shown on the perspective view and a set of perspective lines or a vanishing point corresponding to each group of the sectional lines are inputted (step 1), wherein the groups of the sectional lines belong to different axial directions, respectively, and each group of the sectional lines represent sectional shapes along second planes perpendicular to one of the axial directions to which the group belongs; each of vanishing points corresponding to an associated one set of the perspective lines are calculated (step 4) when the perspective lines are inputted; a position of the visual point in the 3-dimensional coordinate system is calculated (step 5) on the basis of the positions of the vanishing points corresponding to the respective groups of the sectional lines; plane equations representing the second planes in the 3-dimensional coordinate system are calculated (step 6) on the basis of the groups of the sectional lines, the positions of the vanishing points and the position of the visual point; projected figures are determined (step 8) each by projecting each group of the sectional lines from the visual point on one of the second planes corresponding to the group of the sectional lines; and the data representing the shape of the 3-dimensional object in the 3-dimensional coordinate system are determined (steps 9, 10) on the basis of the projected figures.

FIG. I

The present invention relates to a method of and an apparatus for determining data representing a 3-dimensional object from a perspective view and, particularly, relates to a method of and an apparatus for determining data representing a 3-dimensional object from a drawing substantially equivalent to a perspective view such as a photograph, an electronic image, a sketch, a design or a handwritten perspective drawing in which the 3-dimensional object is projected.

It is often demanded to determine, on the basis of a perspective view of a 3-dimensional object projected onto a 2-dimensional plane, data representing the original 3-dimensional object such as coordinate data of respective points on the 3-dimensional object. For example, in the case where a 3-dimensional model of a product is generated on the basis of a sketch or a perspective view drawn by an industrial designer for designing the external appearance of the product, data representing the shape of the imaginary product cannot be determined by measuring the product per se directly because the product is under designing and no real product exists. In this case, it is necessary to determine data representing the shape of the imaginary product on the basis of the sketch which is a perspective view of the product or on the basis of the perspective view. The "perspective view" used herein is a view obtained by projecting an object from a visual point onto a plane, wherein the plane is placed between the visual point and the object or the object is placed between the plane and the visual point.

In the case where two or more perspective views projected from different visual points are provided, data representing the original 3-dimensional object can be obtained analytically on the basis of the binocular stereoscopic vision method or on the basis of the theory of survey can be obtained, for example, by using a method as disclosed in "Modeling of 3-Dimensional Shape from Drawings" Nishihara, Computer Today July, 1993, No. 56 PP. 19-29, 48-52. In the case where only one perspective view is provided, the method such as the binocular stereoscopic vision method cannot be used.

A method of determining data representing the shape of a 3-dimensional object on the basis of a perspective view of the 3-dimensional object drawn by two- or three-point perspective projection is known as disclosed by, for example, in JP-A-3-154972, "Recovery of 3D information from a 2D image Using the Mirror symmetry in the Object" Z. Kiuwei et al, Bulletin of JSSD No. 78, 1990, or "Automatic Reconstruction of a Polyhedron from Orthographic Views" Masuda et al, CG symposium '92, September, 1992, pp. 105-114. In the case where two or more pairs of symmetrical points with respect to one symmetrical plane are given on a perspective view, this method determines the 3-dimensional coordinates by determining vanishing points on the basis of bundles of lines connecting symmetrical points of the respective pairs and the symmetrical plane on the basis of the pairs of symmetrical points. Accordingly, this method cannot be applied to any object but an object symmetrical with respect to left and right.

As described above, heretofore, there is not known any method of determining, on the basis of a perspective view of a 3-dimensional object having an unknown shape, data representing the shape of the original object. Therefore, even in the case where computer input data necessary for processing an imaginary product as designed by CAD, that is, where data representing the shape of the imaginary product are to be obtained from a sketch drawn by a designer, it is required hitherto to produce a product model by paper or clay and obtain data representing the shape of the imaginary object by measuring the model. This is a work which requires a great deal of labor.

An object of the present invention is to provide a method of and an apparatus for simply determining data representing the shape of a 3-dimensional object on the basis of a perspective view of the object drawn onto a 2-dimensional plane.

According to the present invention, there is provided a method of determining data representing a shape of a 3-dimensional object in a 3-dimensional coordinate system on the basis of a perspective view of the object drawn on a first plane, the perspective view being substantially equivalent to a figure obtained by projecting the object from a visual point on the first plane which is perpendicular to a straight line connecting the visual point to a selected point on the object, the method comprising the steps of: inputting the perspective view, at least two groups of sectional lines of the object shown on the perspective view and a set of perspective lines or a vanishing point corresponding to each group of the sectional lines, wherein the groups of the sectional lines belong to axial directions, respectively, making predetermined angles other than zero with each other and each group of the sectional lines represent sectional shapes along second planes perpendicular to one of the axial directions to which the group belongs; calculating each of vanishing points corresponding to an associated one set of the perspective lines when the perspective lines are inputted; calculating a position of the visual point in the 3-dimensional coordinate system on the basis of the positions of the vanishing points corresponding to the respective groups of the sectional lines; calculating plane equations representing the second planes in the 3-dimensional coordinate system on the basis of the groups of the sectional lines, the positions of the vanishing points and the position of the visual point; determining projected figures each by projecting each group of the sectional lines from the visual point on

2

one of the second planes corresponding to the group of the sectional lines; and determining the data representing the shape of the 3-dimensional object in the 3-dimensional coordinate system on the basis of the projected figures corresponding to the respective groups of the sectional lines.

According to the present invention, there is further provided an apparatus for determining data representing a shape of a 3-dimensional object in a 3-dimensional coordinate system on the basis of a perspective view of the object drawn on a first plane, the perspective view being substantially equivalent to a figure obtained by projecting the object from a visual point on the first plane which is perpendicular to a straight line connecting the visual point to a selected point on the object, the apparatus comprising: means for inputting the perspective view, at least two groups of sectional lines of the object shown on the perspective view and a set of perspective lines or a vanishing point corresponding to each group of the sectional lines, wherein the groups of the sectional lines belong to axial directions, respectively, making predetermined angles other than zero with each other and each group of the sectional lines represent sectional shapes along second planes perpendicular to one of the axial directions to which the group belongs; means for calculating each of vanishing points corresponding to an associated one set of the perspective lines when the perspective lines are inputted; means for calculating a position of the visual point in the 3-dimensional coordinate system on the basis of the positions of the vanishing points corresponding to the respective groups of the sectional lines; means for calculating plane equations representing the second planes in the 3-dimensional coordinate system on the basis of the groups of the sectional lines, the positions of the vanishing points and the position of the visual point; means for determining projected figures each by projecting each group of the sectional lines from the visual point on one of the second planes corresponding to the group of the sectional lines; and means for determining the data representing the shape of the 3-dimensional object in the 3-dimensional coordinate system on the basis of the projected figures corresponding to the respective groups of the sectional lines.

All straight lines (segments) perpendicular to one plane in a 3-dimensional space (real space) are generally converged into one vanishing point when they are projected onto a perspective view. When this plane and the perspective view are disposed in the 3-dimensional space, a vector of a normal line to this plane is parallel with a vector toward a visual point of the perspective view from the vanishing point corresponding to this plane. Accordingly, if the visual point of the perspective view and the vanishing point are known, an equation representing the plane corresponding to the vanishing point in the 3-dimensional space can be obtained definitely except for the distance between the visual point and the plane. This equation is expressed with a parameter of the distance between the visual point and the plane. The relationship between the vanishing point and the visual point is described in detail by Kondo et al "Estimation of a Point of View with Perspective Drawing and the Application" Information Processing Society in Japan, Technical Report, July, 1988 pp. 686-693.

Assume now that sectional line along one plane of a 3-dimensional object is added to its projection image on its perspective view. When the position of the plane corresponding to the sectional line in the 3-dimensional space is determined in a manner as described above, the projection of the sectional line shown in the perspective view on the plane in the 3-dimensional space should be coincide with the sectional line which would appear on the 3-dimensional object located in the 3-dimensional space. Since the equation of the plane in the 3-dimensional space is known, the coordinate data of the sectional line in the 3-dimensional coordinate system can be obtained. Because the sectional line constitutes a part of the 3-dimensional object, the data representing the 3-dimensional object can be obtained in a manner as mentioned above. Although one parameter is not determined yet in the equation representing the plane, the parameter may take any value without causing any distortion of the projection on the plane because the parameter only affects on the magnification in the projection.

Further, the present invention is particularly effective in the case where a plurality of sectional lines are provided so as to intersect one another. In this case, projection of a first sectional line onto a plane in the 3-dimensional space is performed in the manner as described above (in which the plane equation is expressed with one parameter). Then, the same procedure is applied to a second sectional line. If the first and second sectional lines intersect at a point, the coordinates of this intersecting point in the 3-dimensional space are expressed by the parameter used in the plane equation corresponding to the first sectional line. Because this intersecting point also belongs to the plane corresponding to the second sectional line, the parameter of the plane equation corresponding to the second sectional line can be expressed by the same parameter as that used in the plane equation corresponding to the first sectional line. As a result, the positional relation between the first and second sectional lines in the 3-dimensional space can be obtained correctly.

When a large number of sectional lines are provided, the aforementioned procedure of connecting two sectional lines is repeated to thereby obtain the relative positional relations between all sectional lines of an object in the 3-dimensional space correctly. In this case, all the data of the sectional lines of the object are expressed by only one parameter (magnification factor) used in the plane equation corresponding to the first sectional line. If a large number of sectional lines are provided, the original 3-dimensional object can be expressed satisfactorily by a combination of the sectional lines. Above all, correct and substantially perfect data of the 3-dimensional object are obtained definitely other than the magnification factor.

The invention will be described in detail in connection with the drawings in which:

Fig. 1 is a diagram showing the structure of an apparatus according to the present invention;

Fig. 2 is a flow chart for explaining a first embodiment of a method according to the present invention;

Fig. 3 is a view showing the relation between each of a horizontal plane (XZ plane), a left vertical plane, a right vertical plane of a cube and a corresponding vanishing point in a perspective view of the cube on an XY plane of XYZ 3-dimensional coordinates;

Fig. 4 is a view showing the positional relations among the horizontal plane and the left vertical plane of the cube of Fig. 3 in the case where the cube is viewed in the direction of X axis, the respective vanishing points of the horizontal plane and the left vertical plane and the visual point in the perspective view of Fig. 3;

Fig. 5 is a view showing the relations among the left vertical plane and the right vertical plane of the cube of Fig. 3 in the case where the cube is viewed in the direction of the Y axis, the respective vanishing points of the left vertical plane and the right vertical plane and the visual point in the perspective view of Fig. 3;

Figs. 6A, 6B and 6C are perspective views of a wedge-shaped object, a cap-shaped object and an egg-shaped object each taken on a 2-dimensional plane;

Figs. 7A, 7B and 7C are views for explaining the process of determining data representing the shape of the cap-shaped object in a 3-dimensional coordinate system on the basis of the perspective view of the cap-shaped object;

Fig. 8 is a sketch of a compact camera generated by perspective projections showing selectional lines along a horizontal plane, a left vertical plane and a right vertical plane;

Fig. 9 is a front view of the compact camera generated on the basis of data determined by applying the method of the present invention to the sketch of Fig. 8;

Fig. 10 is a perspective view of the compact camera generated on the basis of data determined by applying the method of the present invention to the sketch of Fig. 8;

Fig. 11 is a side view of the compact camera generated on the basis of data determined by applying the method of the present invention to the sketch of Fig. 8;

Fig. 12 is a perspective view of the compact camera obtained by applying beveling to the external appearance thereof which is obtained on the basis of data determined by applying the method of the present invention to the sketch of Fig. 8;

Fig. 13 is a flow chart for explaining a second embodiment of the method according to the present invention;

Fig. 14 is a perspective view in which the method of the second embodiment is applied;

Fig. 15 is a view showing sectional lines and intersecting points extracted from the perspective view of Fig. 14;

Fig. 16 is a block diagram showing an apparatus for carrying out a third embodiment of the method according to the present invention;

Fig. 17 is a flow chart showing the steps of the method of the third embodiment;

Fig. 18 is a block diagram showing an apparatus for carrying out a fourth embodiment of the method according to the present invention;

Fig. 19 is a flow chart showing the steps of the method of the fourth embodiment;

Fig. 20 is a block diagram showing an apparatus for carrying out a fifth embodiment of the method according to the present invention;

Fig. 21 is a flow chart showing the steps of the method of the fifth embodiment;

Fig. 22 is a block diagram showing an apparatus for carrying out a sixth embodiment of the method according to the present invention; and

Fig. 23 is a flow chart showing the steps of the method of the sixth embodiment.

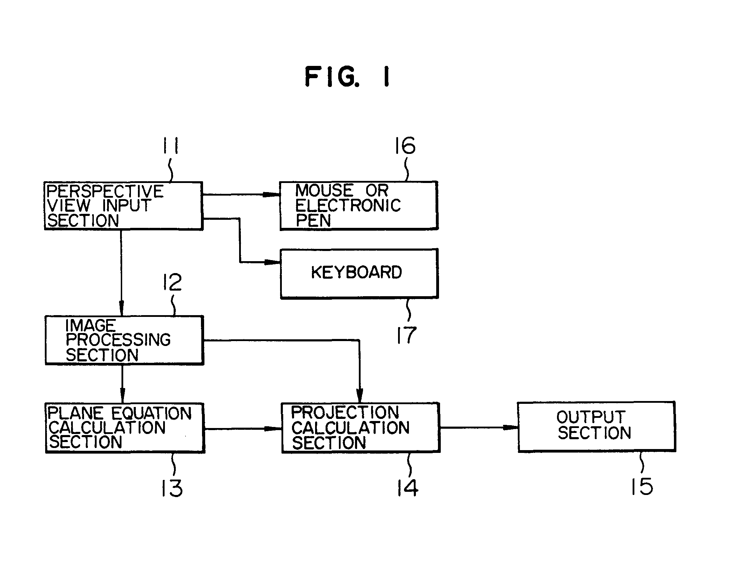

Referring to Figs. 1 through 8, a method according to a first embodiment of the present invention and an apparatus for carrying out the method will be described below.

In the method and apparatus according to the first embodiment, data representing a 3-dimensional object in a 3-dimensional coordinate system are determined on the basis of a perspective view (on which three groups of sectional lines of the 3-dimensional object are shown) obtained by perspectively projecting the 3-dimensional object onto a first plane, for example, an XY plane, in an XYZ 3-dimensional coordinate

4

space from a visual point in the outside of the XY plane. The position of the visual point is selected so that a line connecting the visual point and a selected point on the object, that is, generally a center point of the object, is perpendicular to the XY plane. Sectional lines in each of the groups belong to one axial direction, so that the respective sectional lines represent the sectional shape of the object along planes perpendicular to the axial direction. That is, in this embodiment, axial directions to which the three groups of sectional lines belong respectively are perpendicular to one another. In this specification, a view, such as a sketch drawn by a designer, equivalent to the aforementioned perspective view is also called "perspective view".

This apparatus has an input section 11 for inputting, through a mouse or electronic pen 16, a perspective view of a 3-dimensional object taken on a 2-dimensional first plane such as an XY plane in an XYZ coordinate system, three groups of sectional lines of the object exhibited on the perspective view and perspective lines for the respective groups of sectional lines. Inputting of the perspective lines may be replaced by inputting of the positions on the XY plane of vanishing points corresponding to the respective groups of sectional lines. Sectional lines in each of the groups belong to one axial direction, so that the sectional lines represent the sectional shape of the object along second planes perpendicular to the axial direction. Three axial directions to which different groups of sectional lines belong respectively intersect one another perpendicularly. Further, this apparatus has an image processing section 12 for extracting sectional lines by applying differential filtering to the input perspective view and sectional lines as occasion demands and for approximating the extracted sectional lines to a broken line or a series connection of segments. The image processing section 12 performs the process of: calculating vanishing points corresponding to the respective groups of sectional lines on the basis of perspective lines when the perspective lines corresponding to the respective groups of sectional lines are inputted to the input section; and calculating the XYZ coordinate position of a visual point in the perspective view on the basis of the sectional lines and the vanishing points corresponding to the sectional lines. Further, this apparatus has a plane equation calculation section 13 for calculating plane equations expressing second planes corresponding to the sectional lines in the XYZ coordinate system on the basis of the XYZ coordinate position of the visual point and the positions of the vanishing points on the perspective view; a projection calculation section 14 for calculating data representing projection images obtained by projecting each of the three groups of sectional lines on the first plane from the visual point onto the second plane corresponding to the sectional lines and for determining data representing the sectional line in the XYZ coordinate system on the basis of the projection data; and an output section 15 for outputting the data obtained in the projection calculation section 14 as object data expressing the shape of the 3-dimensional object in the XYZ coordinate system.

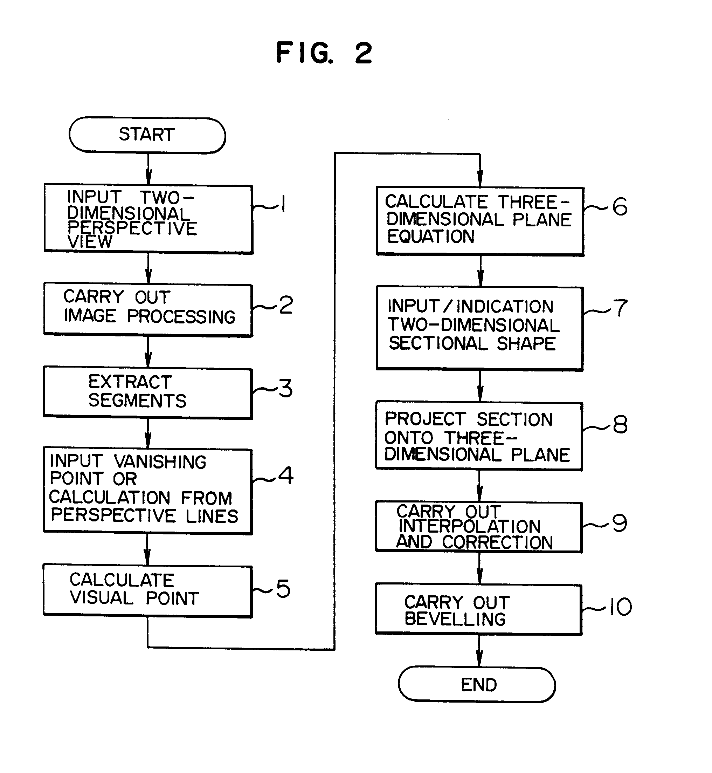

Referring to Fig. 2, the method of the first embodiment carried out by the apparatus of Fig. 1 will be described below.

First, a perspective view in which an object in a 3-dimensional space expressed in an XYZ coordinate system is drawn on a 2-dimensional first plane, and three groups of sectional lines expressing the sectional shape of the object along second planes perpendicular to three different axial directions respectively on the perspective view are inputted with a mouse or an electronic pen 16 to the input section 11 (step 1). Then, as occasion demands, in an image processing section 12 differential filtering is applied to the perspective view and sectional lines to thereby extract sectional lines (step 2). The extracted sectional lines are approximated to broken lines respectively (step 3). The reason why the extracted sectional lines are approximated to broken lines is that the projection images of the 3-dimensional object or the sectional lines are processed as sets of short segments.

Alternatively, perspective lines corresponding to the respective groups of sectional lines are inputted, through the mouse or electronic pen 16, onto the image having the extracted sectional lines or, the positions on the first plane of vanishing points corresponding to the respective groups of sectional lines are inputted through a keyboard 17 (step 4). In the case where perspective lines may be found easily in accordance with the contents of the perspective view so that vanishing points as positions to which perspective lines are converged may be found easily, a function for automatically retrieving the positions of vanishing points may be provided to the image processing section 12. Next, the image processing section 12 calculates the XYZ coordinate position of the visual point in the perspective view (step 5). Although the position of the visual point may be inputted from the outside, it is preferable that the position of the visual point is calculated by a known method from vanishing points or perspective lines because it is difficult to obtaining the position of the visual point directly from the perspective view, unlike vanishing points. The perspective view, the data of the sectional lines and the positional data of the vanishing points and the visual point which have been inputted to the input section 11 or calculated by the image processing section 12 are delivered to the plane equation calculation section 13.

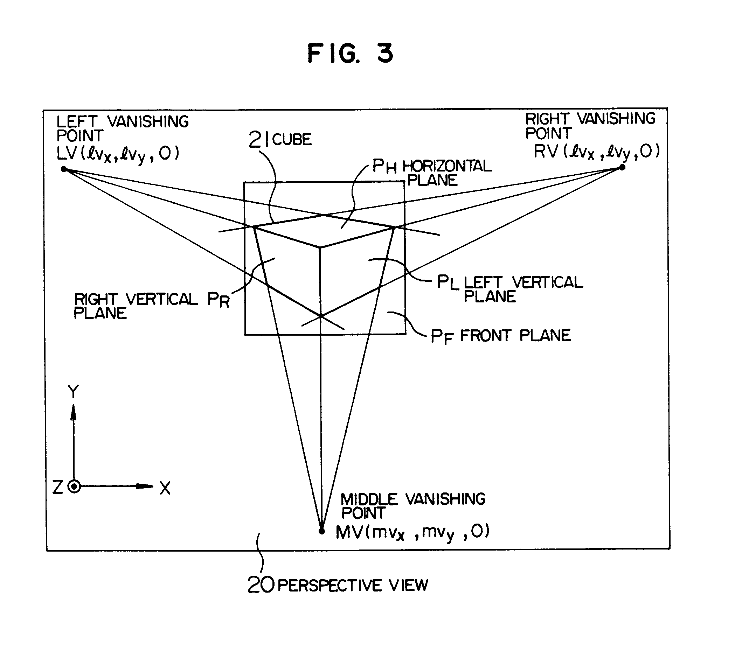

The plane equation calculation section 13 calculates 3-dimensional equations of the second planes corresponding to the vanishing points (step 6). The procedure of calculating equations of the second planes will be described in detail. Assume now that a perspective view 20 of a cube 21 is inputted as shown in Fig. 3. Consider now an XYZ coordinate system in which the perspective view 20 is drawn on an XY plane of the XYZ coordinate system and the visual point F is expressed by (0, 0, f). Respective edges of the cube 21 are sectional lines because they are regarded as edges of respective cut surfaces (planes) of the cube. Every four of twelve edges of the cube are parallel with each other, so that they are perspective lines converged to a left vanishing point LV ($lv_x$, $lv_y$, 0), a right vanishing point RV ($rv_x$, $rv_y$, 0) and a middle vanishing point MV ($mv_x$, $mv_y$, 0) respectively when projected to the perspective view 20. Let planes of the cube corresponding to the respective vanishing points LV, RV and MV be a left vertical plane $P_L$, a right vertical plane $P_R$ and a horizontal plane $P_H$ respectively. Further, let a plane opposite to the visual point F with respect to the perspective view 20 and the cube 21 and parallel with the perspective view 20 be a front plane $P_F$. Normal vectors of the left and right vertical planes $P_L$ and $P_R$ extend toward the left and right vanishing points respectively. A normal vector of the horizontal plane $P_H$ extends toward the middle vanishing point. The normal line of the front plane $P_F$ is parallel with the line or the Z axis.

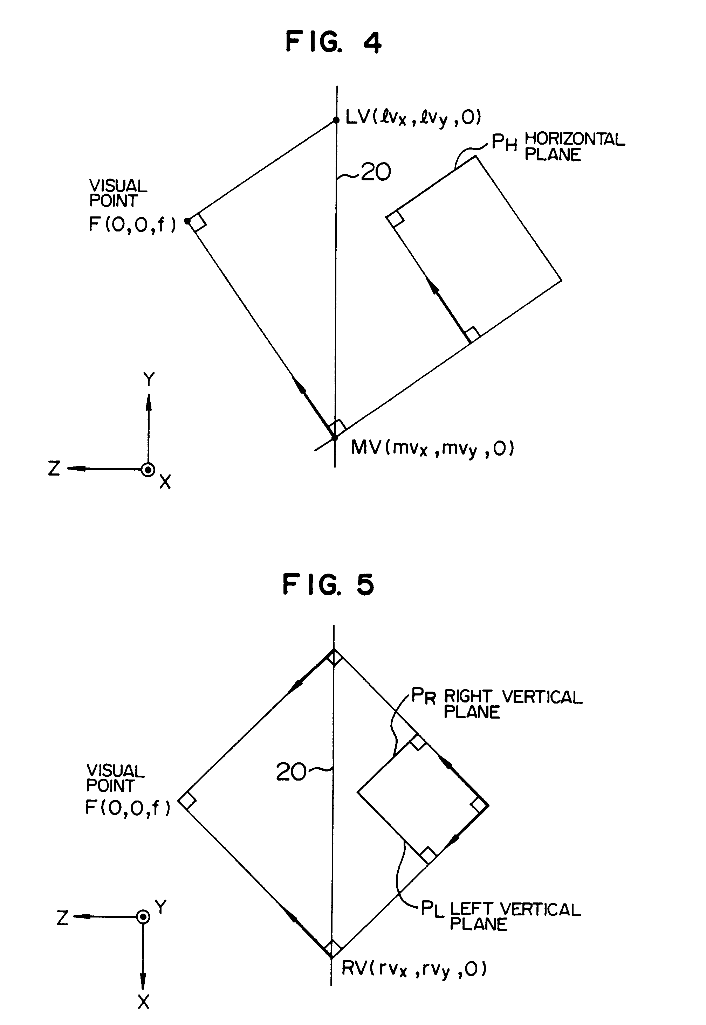

Fig. 4 shows the case where a 3-dimensional space in which the perspective view 20 and the cube 21 are arranged as described above is viewed in the direction of the X axis. Fig. 5 shows the case where a 3-dimensional space in which the perspective view 20 and the cube 21 are arranged as described above is viewed in the direction of the Y axis. (These drawings are based on orthogonal projection.) In Figs. 4 and 5, the reference numeral 20 designates a plane in which the perspective view is drawn. The XYZ coordinate system is selected so that the left vertical plane $P_L$, the right vertical plane $P_R$ and the horizontal plane $P_H$ coincide with an XY plane, a YZ plane and an XZ plane respectively. As seen from these drawings, the normal vector of the horizontal plane $P_H$ is parallel with the vector ($-mv_x$, $-mv_y$, f) extending in a direction toward the visual point from the middle vanishing point MV. Accordingly, the horizontal plane $P_H$ is expressed by the following equation in the 3-dimensional coordinate system.

$$- \frac{mv_x}{f} X - \frac{mv_y}{f} + Z = d \qquad (1)$$

The normal vector of the left vertical plane $P_L$ is parallel with the vector ($-\ell v_x$, $-\ell v_y$, f) extending in a direction toward the visual point from the left vanishing point LV. Accordingly, the left vertical plane $P_L$ is expressed by the following equation.

$$- \frac{\ell v_x}{f} X - \frac{\ell v_y}{f} Y + Z = d \qquad (2)$$

Similarly, the right vertical plane $P_R$ is expressed by the following equation.

$$- \frac{rv_x}{f} X - \frac{rv_y}{f} Y + Z = d \qquad (3)$$

The front plane $P_F$ is perpendicular to the view line, so that the front plane $P_F$ is expressed by the following equation.

$$Z = d \qquad (4)$$

In these equations, $\underline{d}$ represents a parameter. Equations of the respective planes are calculated as described above, so that the calculated equations are applied to the projection calculation section 13.

Then, the correspondency between the planes and the sectional lines is determined. Because at least two groups of sectional lines are generally drawn in an image of a 3-dimensional object projected onto a perspective view, the correspondency between sectional lines and planes is inputted by an operator to the projection calculation section 13 through the input section 11 (step 7). The correspondency between input sectional lines and the left, right, horizontal and front planes may be discriminated automatically. In this occasion, the sectional lines along parallel planes belong to the same vanishing point, so that it is possible

EP 0 596 518 A2

to allot the same plane to such sectional lines. In practice, such respective sectional lines in the 3-dimensional space are corresponding to parallel planes, respectively, having different values of the parameter d. Because the parameter $\underline{d}$ is not determined yet, the sectional lines are now considered to belong to the same plane.

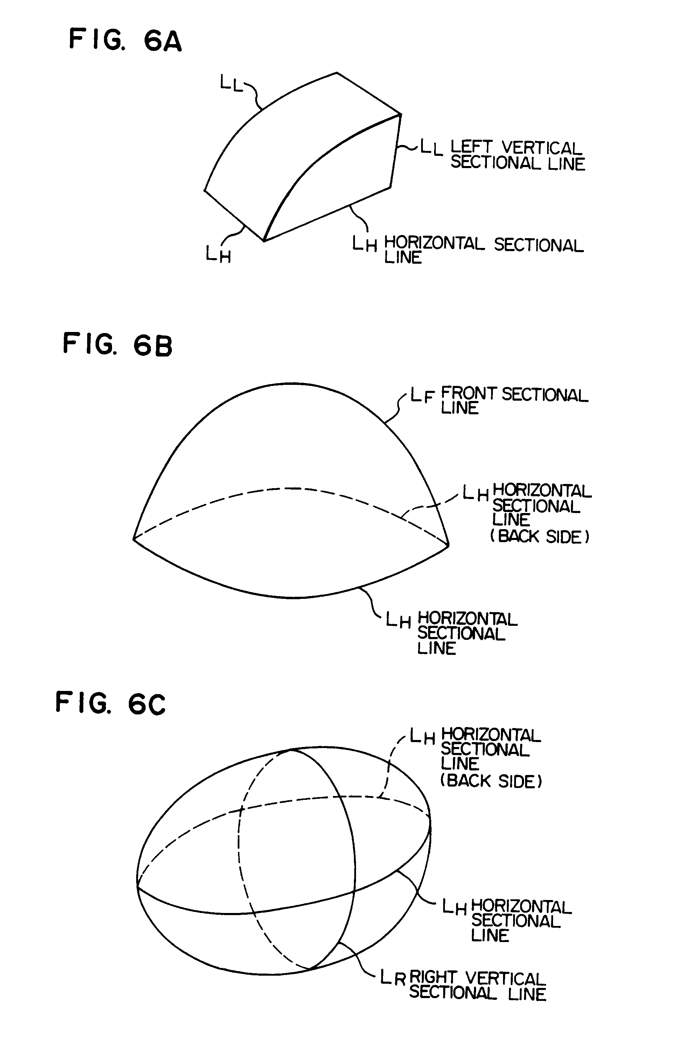

Figs. 6A to 6C show examples of the correspondence of sectional lines to planes in wedge-shaped, cap-shaped, egg-shaped 3-dimensional objects respectively. In the drawings, for example, the horizontal sectional line $L_H$, the left vertical sectional line $L_L$, the right vertical sectional line $L_R$ and the front sectional line $L_F$ correspond to the horizontal plane $P_H$, the left vertical sectional plane $P_L$, the right vertical sectional plane $P_R$ and the front sectional plane $P_F$ respectively.

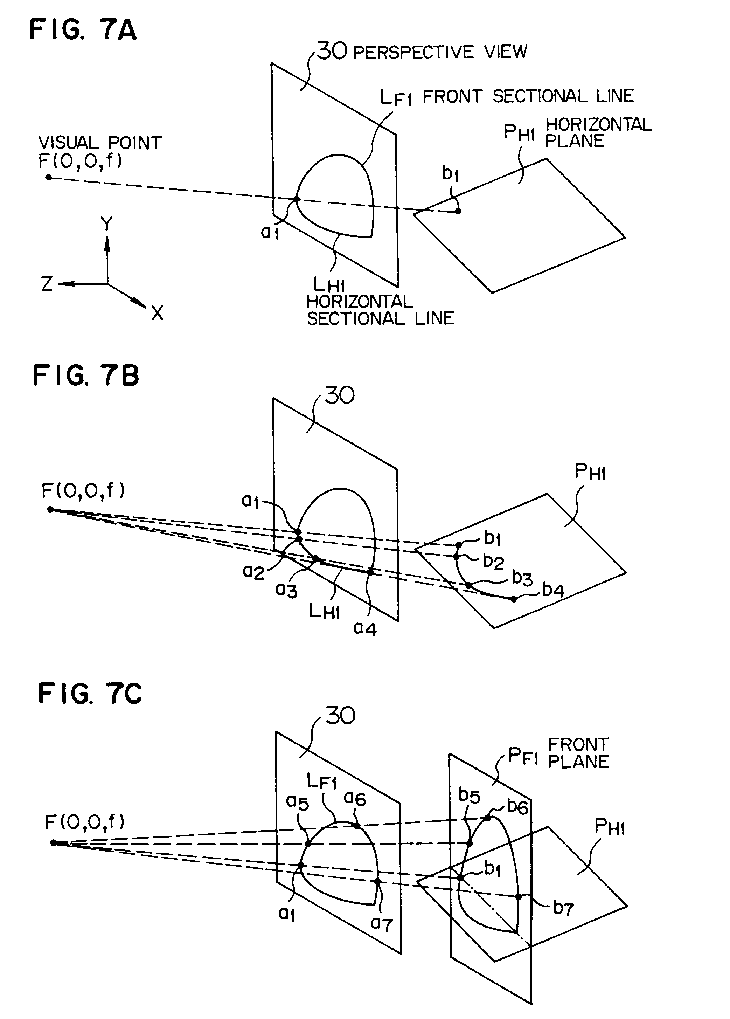

Then, the respective sectional lines are projected onto corresponding planes in the 3-dimensional space with the visual point F as a projection point (step 8). As described above, the plane of perspective view is coincident with the XY plane in the coordinates in the 3-dimensional space. Referring to Figs. 7A through 7C, the process which is performed by using the perspective view 30 of a cap-shaped object as shown in Fig. 6B will be described below.

First, the horizontal sectional line $L_{H1}$ on the perspective view 30 is projected onto the horizontal plane $P_{H1}$ in the 3-dimensional space. At this time, the equation of the horizontal plane $P_{H1}$ includes the parameter $\underline{d}$ so that the equation practically represents a group of planes parallel with one another. It is therefore necessary that the horizontal plane $P_{H1}$ is decided definitely by determining one point on the horizontal plane $P_{H1}$. Assuming a vector which directs toward an arbitrary point $a_1$ on the horizontal sectional line $L_{H1}$ on the perspective view 30 from the visual point F, a point $b_1$ ($x_0$, $y_0$, $z_0$) is set in an arbitrary position on extension of this vector so that the point $b_1$ is included in the horizontal plane $P_{H1}$. Then, the value of the parameter $\underline{d}$ is determined by substituting $b_1$ into the equation (1) as follows.

$$d = - \frac{mv_x}{f} x_0 - \frac{mv_y}{f} y_0 + z_0 \qquad (5)$$

As a result, the horizontal plane $P_{H1}$ is decided definitely in the 3-dimensional space (Fig. 7A).

Then, points $a_2$, $a_3$ and $a_4$ on the horizontal sectional line $L_{H1}$ are projected onto the horizontal plane $P_{H1}$ to thereby determine points $b_2$, $b_3$ and $b_4$ (Fig. 7B). Assuming that the coordinates of the point $a_2$ and the coordinates of the corresponding point $b_2$ are ($a_x$, $a_y$, 0) and ($b_x$, $b_y$, $b_z$) respectively, the vector directing toward the point $a_2$ from the visual point F is expressed by ($a_x$, $a_y$, -f) and the vector directing toward the point $b_2$ from the visual point F is expressed by $\underline{n}$ times thereof. The following relations hold.

$b_x = n \cdot a_x$
$b_y = n \cdot a_y$
$b_z = (1-n) \cdot f$    (6)

A solution of $\underline{n}$ is obtained by substituting the equations (5) and (6) into the equation (1).

$$n = \frac{- \dfrac{mv_x}{f} x_0 - \dfrac{mv_y}{f} y_0 + z_0 - f}{- \dfrac{mv_x}{f} a_x - \dfrac{mv_y}{f} a_y - f} \qquad (7)$$

The coordinates of the point $b_2$ is obtained by substituting the obtained $\underline{n}$ into the equation (6). The points $b_3$ and $b_4$ are obtained in the same manner as described above.

In the perspective view 30, the point $a_1$ on the horizontal sectional line $L_{H1}$ is also a point on the front sectional line $L_{F1}$. Accordingly, the front plane $P_{F1}$ in the 3-dimensional space passes through the point $b_1$-($x_0$, $y_0$, $z_0$). On the basis of this fact and the equation (4), the horizontal plane $P_{F1}$ is expressed by the following equation.

$d = z_0$    (8)

7

Then, points $a_5$, $a_6$ and $a_7$ on the front sectional line are projected onto the front plane $P_{F1}$ tothereby determine points $b_5$, $b_6$ and $b_7$ after projection (Fig. 7C). Because $\underline{n}$ is decided by the following equation, the points $b_5$, $b_6$ and $b_7$ are obtained by using the parameter $\underline{n}$.

$$n = \frac{f - z_0}{f} \qquad (9)$$

All the coordinates of the points $b_1$ to $b_7$ in the 3-dimensional space are determined by the aforementioned process.

Then, interpolation/correction is carried out (step 9). Because the points (for example, points $a_1$ to $a_7$) on sectional lines are projected in the aforementioned process, lines connecting the projected points are obtained by this interpolation. In the case of sectional lines drawn freehand or the like, correction is performed suitably because distortion may occur in the resulting object data. Beveling is performed on the basis of the thus obtained object data (step 10). Because the object data obtained from the sectional lines are substantially based on a wire frame model, the object data are converted into data based on a surface model by this beveling.

By the above process, object data can be obtained with respect to an image of a 3-dimensional object drawn on one perspective view.

When the projection plane is the left vertical plane, the equation equivalent to the equation (7) is as follows.

$$n = \frac{-\dfrac{\ell v_x}{f} x_0 - \dfrac{\ell v_y}{f} y_0 + z_0 - f}{-\dfrac{\ell v_x}{f} a_x - \dfrac{\ell v_y}{f} a_y - f} \qquad (10)$$

When the projection plane is the right vertical plane, the equation equivalent to the equation (7) is as follows.

$$n = \frac{-\dfrac{r v_x}{f} x_0 - \dfrac{r v_y}{f} y_0 + z_0 - f}{-\dfrac{r v_x}{f} a_x - \dfrac{r v_y}{f} a_y - f} \qquad (11)$$

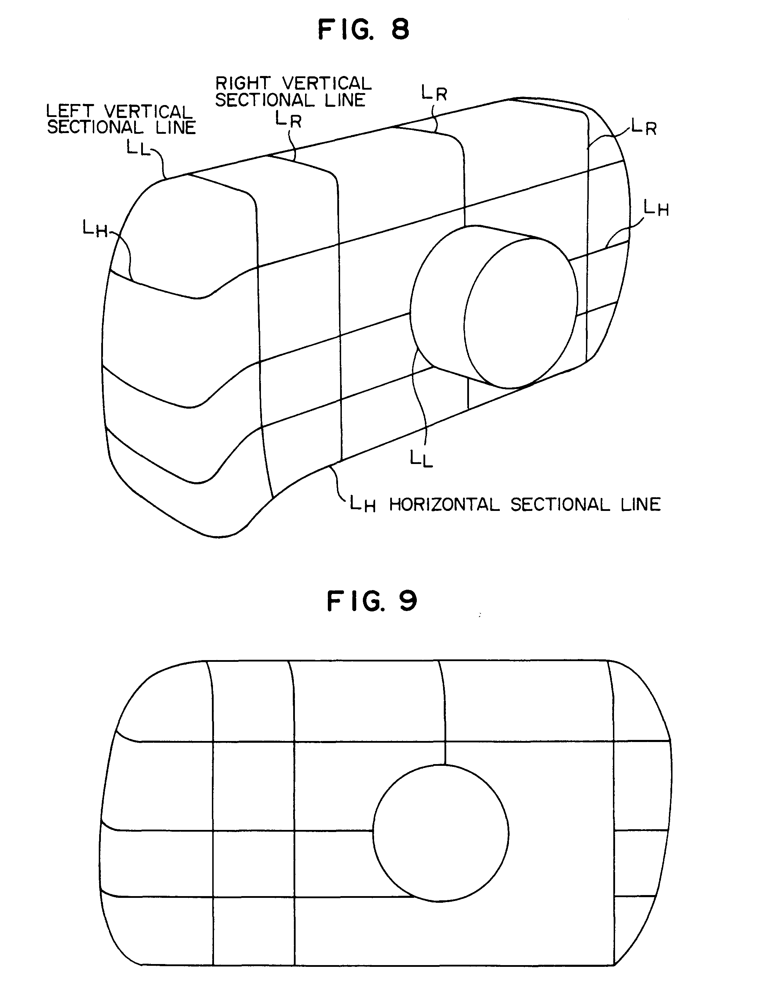

An example in which object data are practically obtained on the basis of a perspective view drawn by a designer will be described below. Fig. 8 is a sketch of a compact camera drawn by a designer with use of perspective projection. In this sketch, a plurality of left vertical sectional lines $L_L$, a plurality of right vertical sectional lines $L_R$ and a plurality of horizontal sectional lines $L_H$ are drawn. It is not difficult for an industrial designer or an architectural designer to draw sectional lines substantially freehand as shown in Fig. 8.

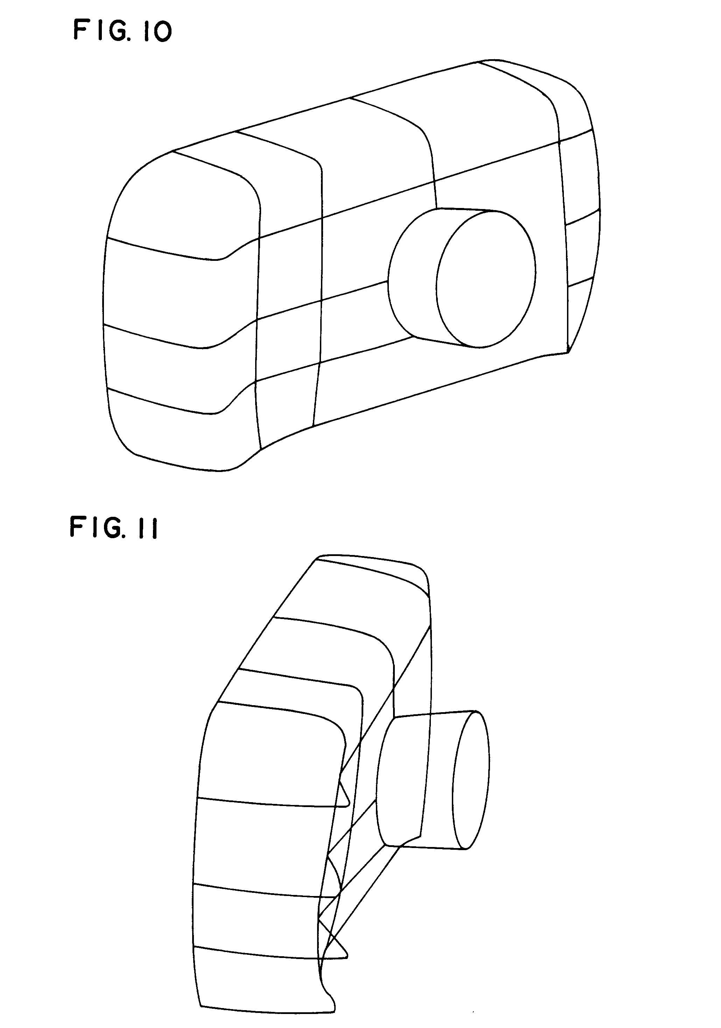

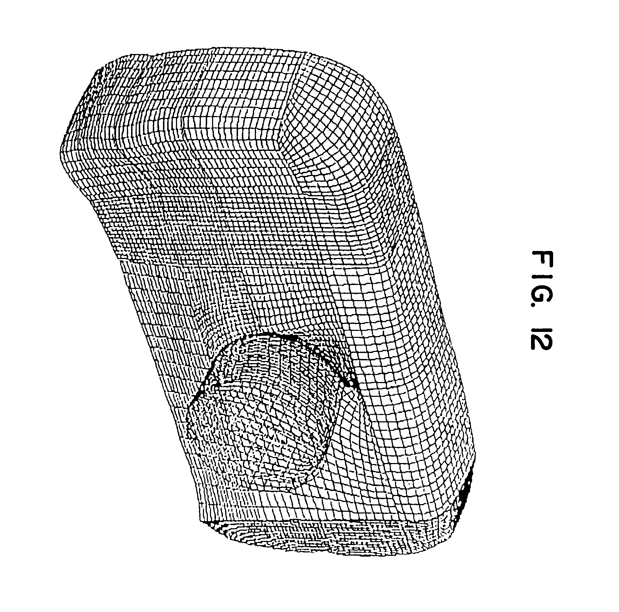

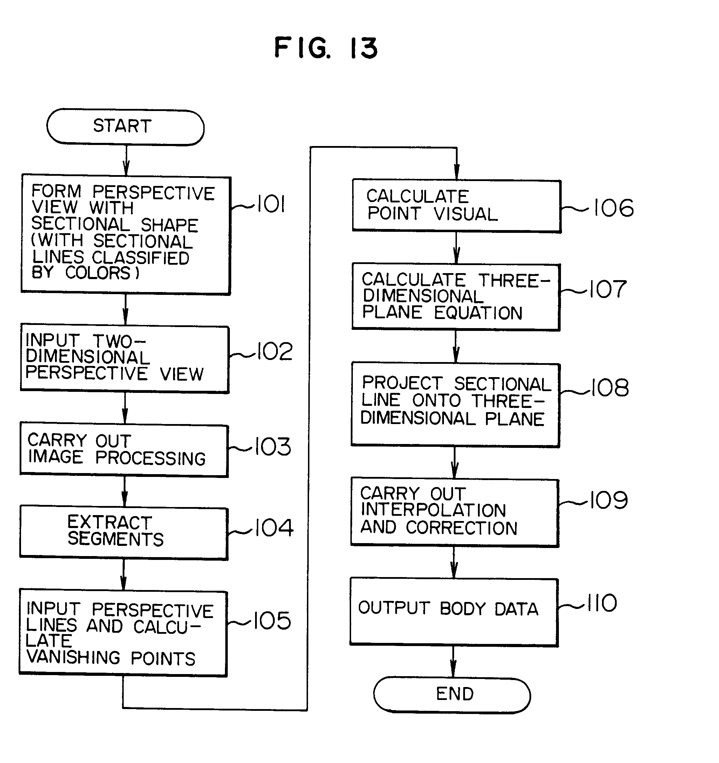

The procedure of the steps 1 to 9 in the flow chart of Fig. 2 is carried out to calculate object data of respective sectional lines in a 3-dimensional space. The aforementioned procedure is executed by software with use of a micro computer. If object data of sectional lines are obtained, a figure expressed by the object data can be rotated or converted into a similar figure freely by CAD. Figs. 9 to 11 show results of rotation in CAD. In the figures, some sectional lines are broken because the sectional lines are not perfectly drawn in the sketch at portions which are out of sight behind a lens portion. A result obtained by performing further beveling in the step 10 is shown in Fig. 12. As seen from this drawing, sufficiently satisfied object data of a 3-dimensional object can be generated from one sketch so that modeling of a 3-dimensional object can be performed.

Although the first embodiment has been described about the case where three groups of sectional lines, that is, three vanishing points, are inputted or calculated, the invention can be applied to the case where data of an object in a 3-dimensional space can be obtained from a perspective view having two vanishing points in accordance with two groups of sectional lines. In the latter case, the respective groups of sectional lines are selected so that one group of sectional lines intersect the other group of sectional lines in the 3-dimensional space. Further, the second planes corresponding to the three groups of sectional lines are not limited to the three planes, that is, the left vertical plane, the right vertical plane and the horizontal plane, but may be those planes perpendicular to three different axial directions, respectively, selected suitably. Even in the case where different groups of sectional lines do not intersect each other in a 3-dimensional space, plane equations of second planes containing one group of sectional lines can be decided by calculating the distance between sectional lines on the basis of the direction of the perspective line and its size on the drawing.

Referring to Figs. 13 through 15, a second embodiment of the present invention will be described below. In the second embodiment, a perspective view of a 3-dimensional object onto a 2-dimensional first plane in which sectional lines corresponding to vanishing points are drawn so as to be distinguished one another in accordance with the vanishing points corresponding thereto is inputted to the perspective view input section 11, and the data representing the shape of the object are determined on the basis of the input.

When, for example, sectional lines are classified by different colors in accordance with the corresponding vanishing points, the perspective view is inputted by using a color image scanner in the perspective view input section 11. Further, true intersecting points of sectional lines in the 3-dimensional space are classified by color. The image processing section 12 processes these sectional lines and true intersecting points in accordance with the classification by color to thereby determine data representing the positions thereof on the first plane.

The operation of this embodiment will be described with reference to the flow chart of Fig. 13. First, a perspective view having cross-sections is generated (step 101). That is, for example, right vertical sectional lines (sectional lines corresponding to a right vanishing point), left vertical sectional lines (sectional lines corresponding to a left vanishing point) and horizontal sectional lines (sectional lines corresponding to a horizontal vanishing point) are additionally written to the sketch by green, red and blue colors respectively. Further, true intersecting points of sectional lines are, for example, indicated by yellow.

This perspective view is read in the perspective view input section 11 (step 101). Control is shifted to the image processing section 12, so that image processing such as differential filtering is carried out if necessary (step 102). Sectional lines are approximated to broken lines on the perspective view (step 103). Then, positional data of vanishing points are obtained by inputting perspective lines or calculating vanishing points (step 105). Positional data of a visual point in an XYZ coordinate system is obtained (step 106). At this time, information expressing the correspondency of the sectional lines to the vanishing points is also stored in accordance with the classification of the sectional lines. Then, equations representing the respective second planes containing sectional lines corresponding to the vanishing points in the 3-dimensional XYZ coordinate system are calculated by the plane equation calculation section 13 in accordance with the respective vanishing points (step 107). Then, control is shifted to the projection calculation section 14, so that the respective sectional lines are projected from the visual point onto the second planes expressed in the XYZ coordinate system by the calculated equations (step 108). Because the respective sectional lines are classified by the vanishing points as described above, correspondency between planes and sectional lines is determined correctly. Further, because true intersecting points are indicated in advance, the relative positional relations between the respective sectional lines are obtained correctly. As a result, the coordinates of the respective points on the sectional lines are calculated correctly. Finally, interpolation/correction is carried out (step 109). The respective data obtained by the aforementioned procedure are outputted as object data from the output section 15 (step 110). Then, the procedure is finished.

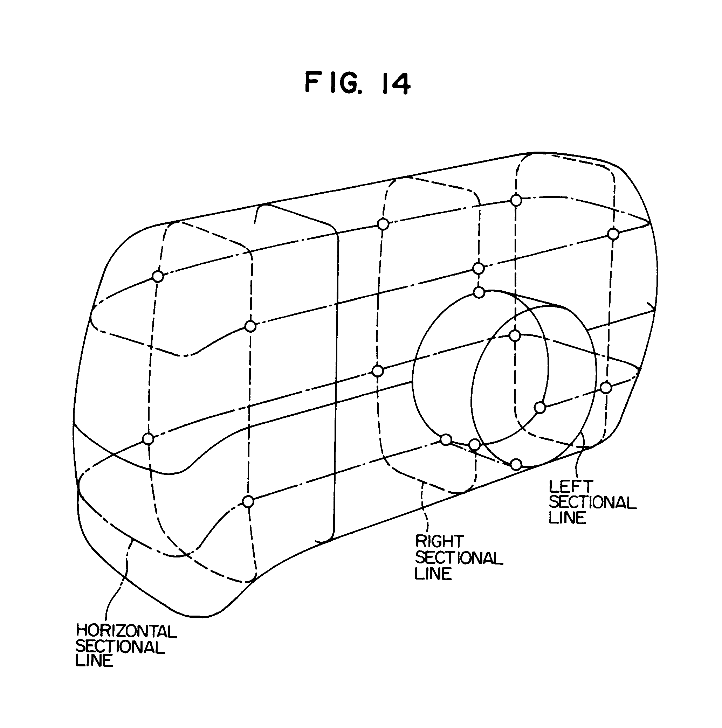

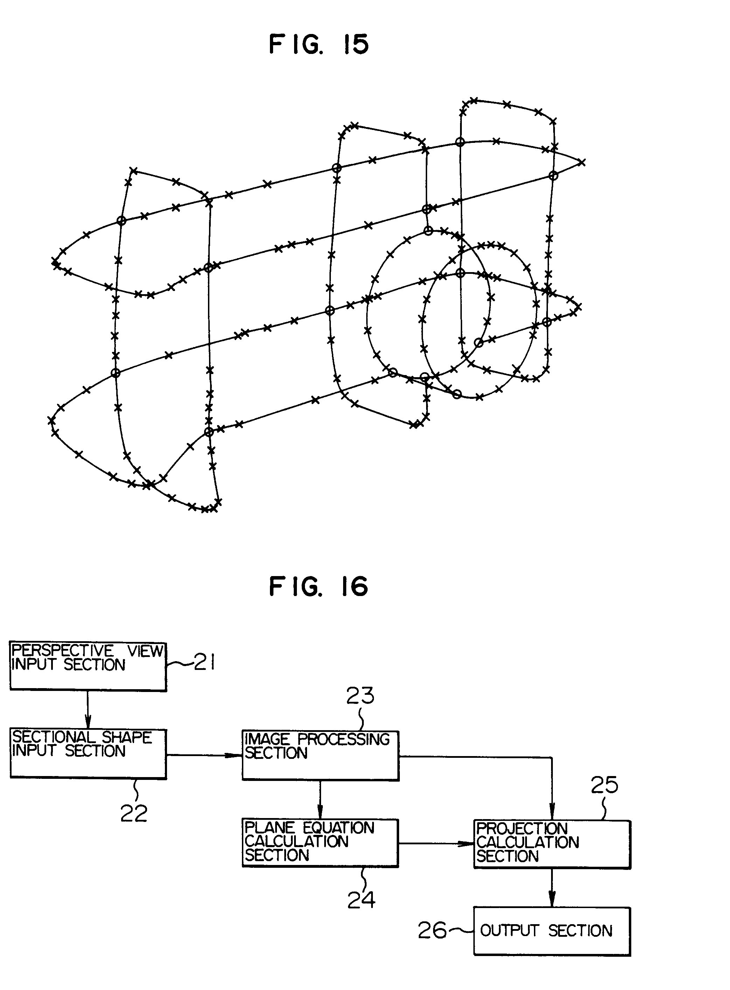

Fig. 14 shows an example of a perspective view to be inputted. In this drawing, the solid line represents a left vertical sectional line expressed as a red line in the above description, the broken line represents a right vertical sectional line expressed as a green line in the above description, and the one-dot broken line represents a horizontal sectional line expressed as a blue line in the above description. Further, the circle represents a true intersecting point expressed by yellow in the above description. Fig. 15 shows a result of reading of the perspective view and approximating the sectional lines to broken lines in the step 104. In Fig. 15, the circle represents a true intersecting point and the symbol "X" represents a point through which a sectional line passes. Each sectional line is approximated to a broken line of a series connection of segments marked by the symbol "X".

9

Fig. 16 is a diagram showing the structure of an apparatus according to a third embodiment of the present invention.

This apparatus uses a perspective view having no sectional line drawn. This apparatus comprises a perspective view input section 21 for inputting a perspective view, a sectional shape input section 22 for inputting sectional lines on the basis of the operator's judgment while displaying the input perspective view on a display unit not shown, an image processing section 23 for extracting sectional lines from the perspective view to which sectional lines are given by the sectional shape input section 22 and for approximating the extracted sectional lines to broken lines, a plane equation calculation section 24, a projection calculation section 25, and an output section 26. The structure of the plane equation calculation section 24, the projection calculation section 25 and the output section 26 is the same as the structure of the plane equation calculation section 13, the projection calculation section 14 and the output section 15 in the second embodiment.

Inputting of sectional lines in the sectional shape input section 22 is carried out, for example, through an electronic pen or a mouse. In this case, inputting of sectional lines is carried out as image data, so that in the case of a horizontal sectional line, a blue curve is written additionally to image data of the perspective view. This work is carried out while observing the perspective view displayed on the display unit, so that sectional lines inputted are real-time displayed so as to be added to the perspective view in accordance with the progress of the sectional line inputting operation. Sectional lines are inputted so as to be classified depending on vanishing points. For example, this classification is expressed by different colors or types for the input sectional lines. At the same time, true intersecting points are inputted. The image processing section 23 is configured so that sectional lines are approximated to broken lines in accordance with the classification of the sectional lines.

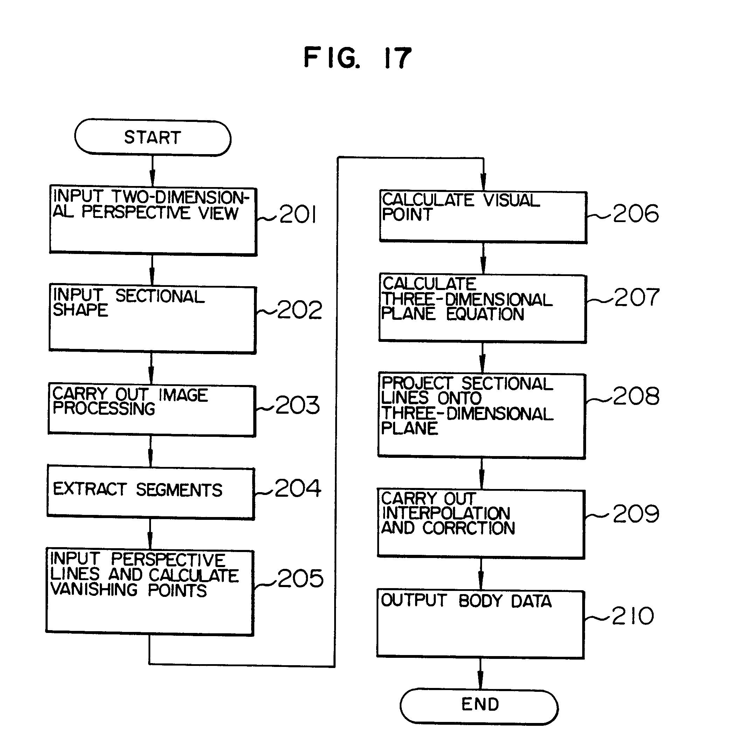

Next, the operation of this embodiment will be described with reference to the flow chart of Fig. 17. First, a perspective view without any sectional line is read by the perspective view input section 21 (step 201) and then control is shifted to the sectional shape input section 22. The sectional shape input section 22 displays the input perspective view so that sectional lines are inputted through a mouse or an electronic pen in accordance with the display of the perspective view (step 202). Then, control is shifted to the image processing section 23, so that image processing such as differential filtering is carried out if necessary (step 203). The input sectional lines are approximated to broken lines (step 204). At this time, information expressing the correspondency of the respective sectional lines to perspective lines in accordance with the classification of the sectional lines is also stored.

Then, inputting of perspective lines or calculation of vanishing points (step 205), calculation of a visual point (step 206), calculation of plane equations in the 3-dimensional space (step 207) and projection of the respective sectional lines onto planes expressed by the calculated equations (step 208) are successively performed in the same manner as in the second embodiment. Because the respective sectional lines are classified depending on vanishing points in the manner as described above, correspondency between planes and sectional lines is determined correctly. Further, because true intersecting points are indicated in advance, the relative positional relations between the respective sectional lines are determined correctly on the basis of the true intersecting points. As a result, the coordinates of the respective points on the sectional lines are determined correctly. Finally, interpolation/correction is carried out (step 209). The respective data determined by the aforementioned procedure are outputted as object data (step 210) and then this routine is terminated.

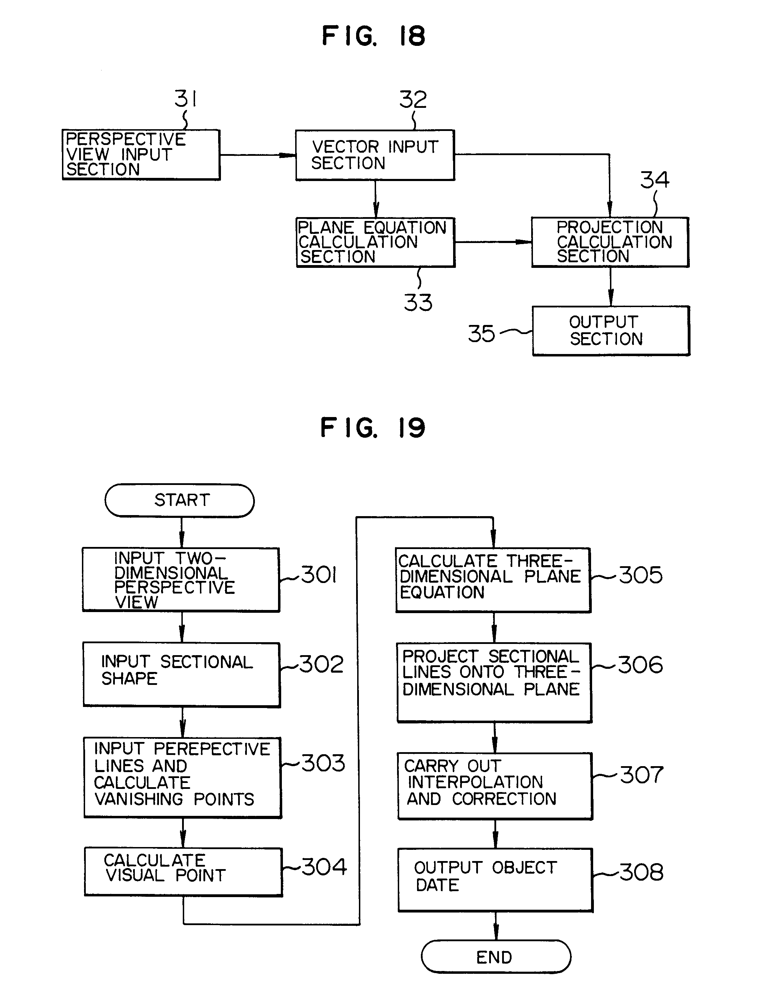

Fig. 18 is a diagram showing the structure of an apparatus according to a fourth embodiment of the present invention. This apparatus uses a perspective view in which no sectional line is drawn. This apparatus comprises a perspective view input section 31 for inputting a perspective view, a vector input section 32 for approximating sectional lines to broken lines as series connections of short segments on the basis of the operator's judgment and inputting sectional lines with the segments as vector data while displaying the input perspective view, a plane equation calculation section 33, a projection calculation section 34, and an output section 35. The structure of the plane expression calculation section 33, the projection calculation section 34 and the output section 35 is the same as the structure of the plane expression calculation section 13, the projection calculation section 14 and the output section 15 in the first embodiment.

The vector input section 32 is constituted by a pen computer obtained by uniting a display screen and an electronic pen into one body, or the like. Inputting of sectional lines in the vector input section 32 is performed by tracing sectional lines through the electronic pen to add loci of the sectional lines onto the perspective view while displaying the perspective view on a display unit. Because the motion of the electronic pen is real-time detected, sectional lines are approximated to broken lines on the basis of the direction of the motion so that the respective segments in the broken lines can be made as vector data. In

10

this case, an instruction to input a sectional line corresponding to a vanishing point is given to the vector input section 32 in advance. Further, true intersecting points are also inputted through the electronic pen. The data obtained in the vector input section 32 in the manner as described above are directly outputted to the plane equation calculation section 33 and to the projection calculation section 34.

Next, the operation of this embodiment will be described with reference to the flow chart of Fig. 19. First, a perspective view without any sectional line is read by the perspective view input section 31 (step 301) and then control is shifted to the vector input section 32. In the vector input section 32, sectional lines are inputted as vector data (step 302). Then, inputting of perspective lines or calculation of vanishing points (step 303), calculation of a visual point (step 304) and calculation of plane equations expressed in the XYZ coordinate system (step 305) are successively performed in the same manner as in the second embodiment. Then, the respective sectional lines are projected from the visual point onto 3-dimensional space planes expressed by the calculated equations in the step 305 on the basis of the data inputted to the vector input section 32 (step 306). Because the respective sectional lines are classified depending on vanishing points in the manner as described above, correspondency between planes and sectional lines is determined correctly. Further, because true intersecting points are indicated in advance, the relative positional relations between the respective sectional lines are obtained correctly on the basis of the true intersecting points. As a result, the coordinates of the respective points on the sectional lines are determined correctly. Finally, interpolation/correction is carried out (step 307). The respective data obtained by the aforementioned procedure are outputted as object data (step 308) and then this routine is terminated.

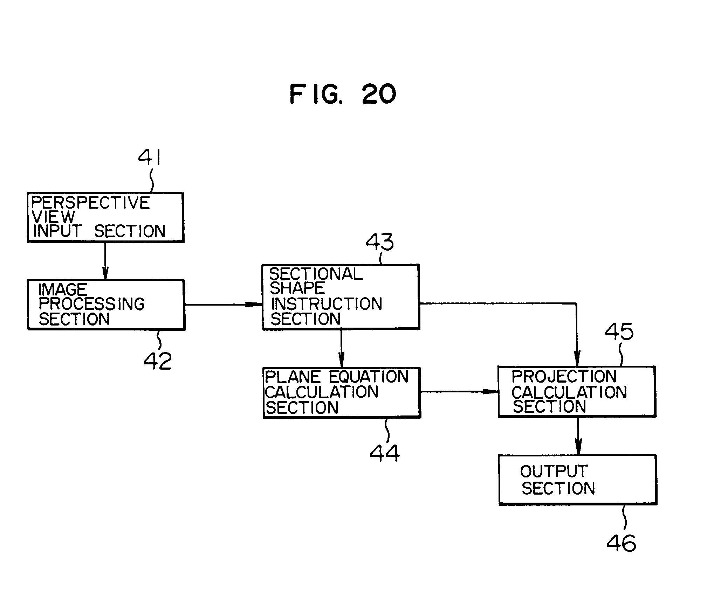

Fig. 20 is a diagram showing the structure of an apparatus according to a fifth embodiment of the present invention.

This apparatus uses a perspective view in which sectional lines are drawn and vanishing points are displayed but sectional lines are not classified depending on vanishing points. This apparatus comprises a perspective view input section 41 for inputting a perspective view, an image processing section 42 for approximating sectional lines to broken lines as series connections of segments on the basis of the input perspective view to thereby make the respective segments as vector data, a sectional shape instruction section 43 for indicating the respective sectional lines from the outside while displaying the sectional lines on a display unit not shown with use of the vector data of the respective segments calculated in the image processing section 42, a plane equation calculation section 44, a projection calculation section 45, and an output section 46. The structure of the plane equation calculation section 44, the projection calculation section 45 and the output section 46 is the same as the structure of the plane equation calculation section 13, the projection calculation section 14 and the output section 15 in the first embodiment.

The sectional shape instruction section 43 indicates on the basis of the operator's judgment the correspondency of the displayed sectional lines to the vanishing points. For example, in the case of a right vertical sectional line, this indication is performed by first setting a command for selection of a right vertical sectional line and then selecting a right vertical sectional line on the display through a mouse or an electronic pen. In this case, for example, the display color of the sectional line for which the selection has been performed may be changed in accordance with the corresponding vanishing point. Further, true intersecting points may be inputted through the mouse or electronic pen. Above all, the correspondence of sectional lines to vanishing points is stored for each of the sectional lines by the processing in the sectional shape instruction section 43.

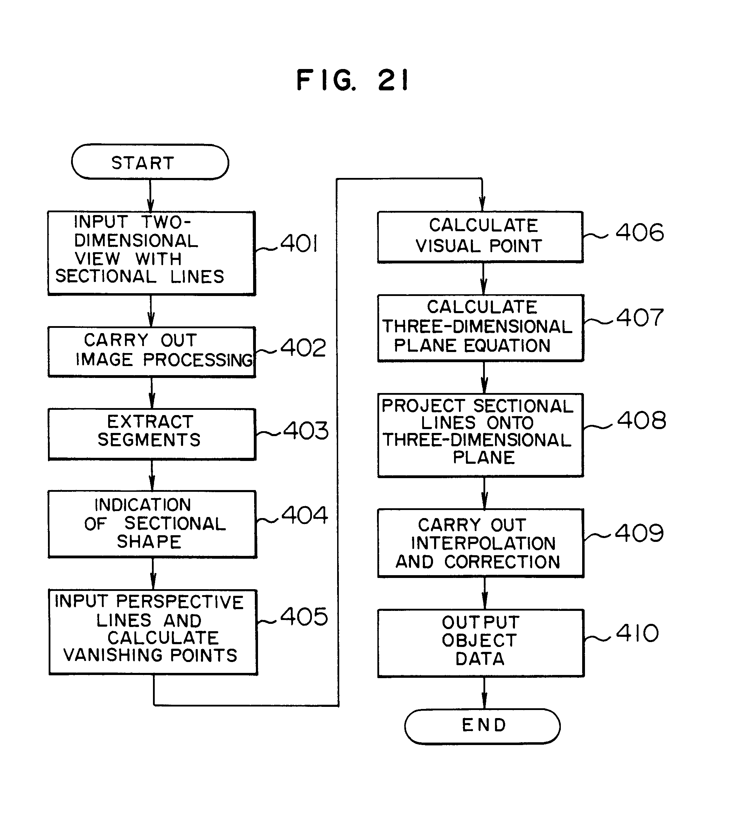

Next, the operation of this embodiment will be described with reference to the flow chart of Fig. 21. First, a perspective view in which sectional lines are drawn but not classified is read by the perspective view input section 41 (step 401). In the image processing section 42, image processing such as differential filtering is carried out on this perspective view (step 402). Sectional lines are approximated to broken lines as series connections of segments on the basis of the perspective view so that the segments are obtained as vector data (step 403). Then, control is shifted to the sectional shape instruction section 43. The sectional shape input section 43 displays the sectional lines on a display on the basis of the vector data, and then processes the sectional lines with use of a mouse or an electronic pen in accordance with the display (step 404).

Then, inputting of perspective lines or calculation of vanishing points (step 405), calculation of a visual point (step 406) and calculation of plane equations containing the sectional lines respectively (step 407) are successively performed in the same manner as in the second embodiment. Then, the respective sectional lines are projected onto three planes expressed by the calculated equations (step 408). Because the respective sectional lines are classified depending on the vanishing points in the manner as described above, correspondency between planes and sectional lines is determined correctly. Further, because true intersecting points are indicated in advance, the relative positional relations between the respective sectional lines are obtained correctly on the basis of the true intersecting points. As a result, the coordinates of the respective points on the sectional lines are obtained correctly. Finally, interpolation/correction is carried out (step 409). The respective data obtained by the aforementioned procedure are outputted as object data (step 410) and then this routine is terminated.

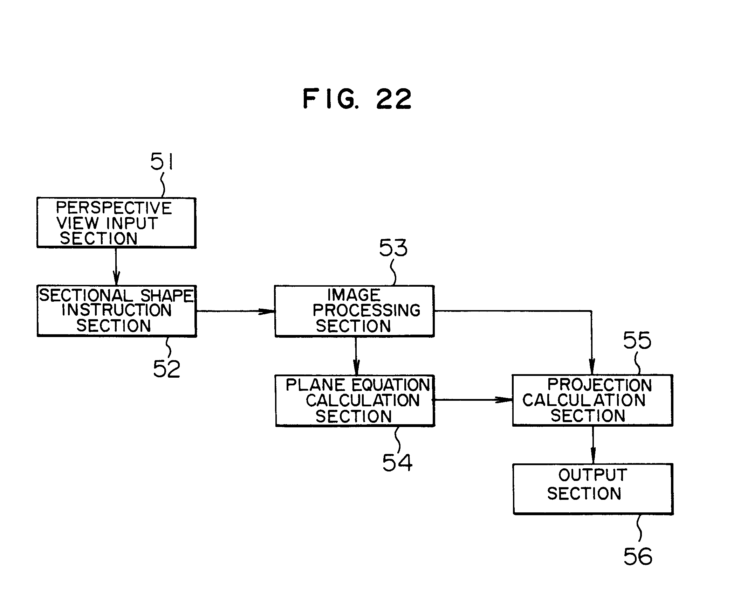

Fig. 22 is a diagram showing the structure of an apparatus according to a sixth embodiment of the present invention.

This apparatus uses a perspective view in which sectional lines are drawn and vanishing points are displayed but sectional lines are not classified depending on the vanishing points. This apparatus comprises a perspective view input section 51 for inputting a perspective view, a sectional shape instruction section 52 for indicating the respective sectional lines in the perspective view from the outside while displaying the perspective view on a display unit not shown, an image processing section 53 for approximating sectional lines to broken lines as series connections of segments on the basis of the perspective view in accordance with the indication of the sectional lines to thereby make the respective segments as vector data, a plane equation calculation section 54, a projection calculation section 55, and an output section 56. The structure of the plane equation calculation section 54, the projection calculation section 55 and the output section 56 is the same as the structure of the plane equation calculation section 13, the projection calculation section 14 and the output section 15 in the second embodiment.

The sectional shape instruction section 52 indicates on the basis of the operator's judgment the correspondency of the sectional lines as displayed in the perspective view to the vanishing points. For example, in the case of a right vertical sectional line, this indication is performed by setting a command for selection of a right vertical sectional line and then selecting a right vertical sectional line on the display through a mouse or an electronic pen. In this case, for example, the display color of the sectional line in which the indication has been performed may be changed in accordance with the corresponding vanishing point. Further, true intersecting points may be inputted through the mouse or electronic pen. Above all, the correspondency of the sectional lines to the vanishing points is stored for each of the sectional lines by the processing in the sectional shape instruction section 52. The image processing section 53 performs its processes while classifying the sectional lines depending on the vanishing points in accordance with the contents indicated by the sectional shape instruction section 52 when representing the sectional lines as vector data or series connections of segments.

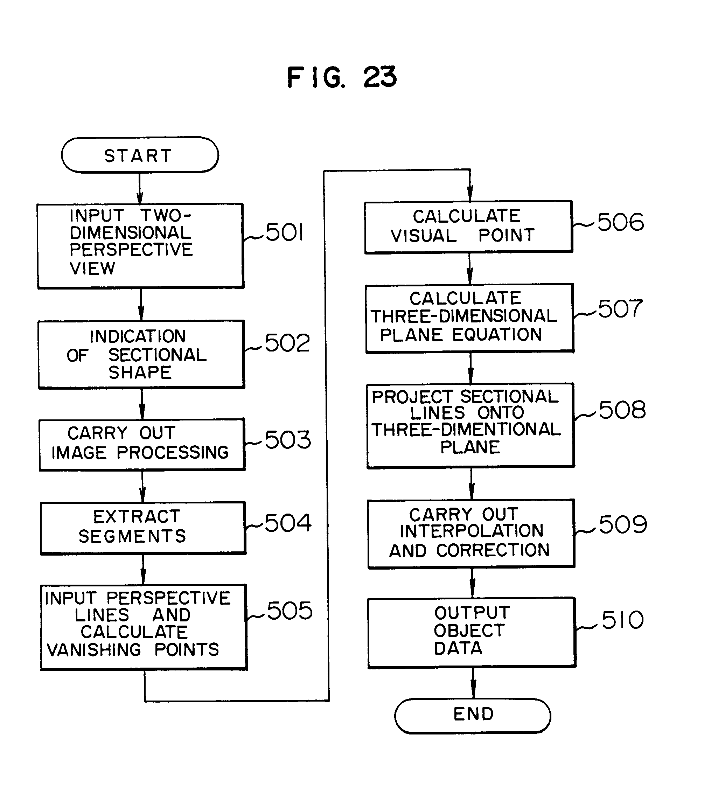

In the following, the operation of this embodiment will be described with reference to the flow chart of Fig. 23. First, a perspective view in which sectional lines are drawn but not classified is read by the perspective view input section 51 (step 501) and then control is shifted to the sectional shape instruction section 52. The sectional shape input section 52 displays the perspective view on a display, so that an indication of each sectional line is performed with use of a mouse or an electronic pen in accordance with this display (step 502). In the image processing section 53, image processing such as differential filtering is carried out on this perspective view (step 503). Sectional lines are extracted as vector data or series connections of segments (step 504).

Then, inputting of perspective lines or calculation of vanishing points (step 505), calculation of a visual point (step 506) and calculation of three plane equations (step 507) and projection of the respective sectional lines (step 508) are successively performed in the same manner as in the second embodiment. Because the respective sectional lines are classified depending on vanishing points in the manner as described above, the correspondency between planes and sectional lines is determined correctly. Further, because true intersecting points are indicated in advance, the relative positional relations between the respective sectional lines are obtained correctly on the basis of the true intersecting points. As a result, the coordinates of the respective points on the sectional lines are obtained correctly. Finally, interpolation/correction is carried out (step 509). The respective data obtained by the aforementioned procedure are outputted as object data (step 510) and then this routine is terminated.

**Claims**

1. A method of determining data representing a shape of a 3-dimensional object in a 3-dimensional coordinate system on the basis of a perspective view of the object drawn on a first plane, the perspective view being substantially equivalent to a figure obtained by projecting the object from a visual point on the first plane which is perpendicular to a straight line connecting the visual point to a selected point on the object, said method comprising the steps of:

    inputting (1) the perspective view, at least two groups of sectional lines of the object shown on the perspective view and a set of perspective lines or a vanishing point corresponding to each group of the sectional lines, wherein the groups of the sectional lines belong to axial directions, respectively, making predetermined angles other than zero with each other and each group of the sectional lines represent sectional shapes along second planes perpendicular to one of the axial directions to which the group belongs:

calculating (4) each of vanishing points corresponding to an associated one set of the perspective lines, when the perspective lines are inputted;

calculating (5) a position of the visual point in the 3-dimensional coordinate system on the basis of the groups of the sectional lines and the positions of the vanishing points corresponding to the respective groups of the sectional lines;

calculating (6) plane equations representing the second planes in the 3-dimensional coordinate system on the basis of the groups of the sectional lines, the positions of the vanishing points and the position of the visual point;

determining (8) projected figures each by projecting each group of the sectional lines from the visual point on one of the second planes corresponding to the group of the sectional lines; and

determining (9, 10) the data representing the shape of the 3-dimensional object in the 3-dimensional coordinate system on the basis of the projected figures corresponding to the respective groups of the sectional lines.

2. A method according to Claim 1, in which when said object is placed in a 3-dimensional space expressed in an XYZ coordinate system, said second planes include at least two groups of planes selected from a group of planes each perpendicular to a Z axis, a group of planes perpendicular to an X axis, a group of planes perpendicular to a Y axis and a group of planes perpendicular to a straight line connecting said visual point and a selected point on said object.

3. A method according to Claim 1, in which when said object is placed in a 3-dimensional space expressed in an XYZ coordinate system, said second planes include a group of planes perpendicular to a Z axis, a group of planes perpendicular to an X axis and a group of planes perpendicular to a Y axis.

4. A method according to any one of Claims 1 to 3, in which said at least two groups of sectional lines are classified by different colors.

5. A method according to any one of Claims 1 to 4, in which said at least two groups of sectional lines are inputted onto a display of said perspective view by an operator through a mouse.

6. A method according to any one of Claims 1 to 4, in which said at least two groups of sectional lines are inputted onto a display of said perspective view by an operator through an electronic pen.

7. A method according to any one of Claims 1 to 6, in which three groups of the sectional lines belonging to three axes perpendicularly intersecting one another are inputted onto said perspective view.

8. A method according to Claim 7, in which said three groups of sectional lines are classified so that they are displayed by different colors.

9. A method according to Claim 8, in which intersecting points of said sectional lines in said 3-dimensional space are displayed on said perspective view.

10. An apparatus for determining data representing a shape of a 3-dimensional object in a 3-dimensional coordinate system on the basis of a perspective view of the object drawn on a first plane, the perspective view being substantially equivalent to a figure obtained by projecting the object from a visual point on the first plane which is perpendicular to a straight line connecting the visual point to a selected point on the object, said apparatus comprising:

means (11) for inputting the perspective view, at least two groups of sectional lines of the object shown on the perspective view and a set of perspective lines or a vanishing point corresponding to each group of the sectional lines, wherein the groups of the sectional lines belong to axial directions, respectively, making predetermined angles other than zero with each other and each group of the sectional lines represent sectional shapes along second planes perpendicular to one of the axial directions to which the group belongs;

means (12) for calculating each of vanishing points corresponding to an associated one set of the perspective lines when the perspective lines are inputted;

means (12) for calculating a position of the visual point in the 3-dimensional coordinate system on

EP 0 596 518 A2

the basis of the groups of the sectional lines and the positions of the vanishing points corresponding to the respective groups of the sectional lines;

means (13) for calculating plane equations representing the second planes in the 3-dimensional coordinate system on the basis of the groups of the sectional lines, the positions of the vanishing points and the position of the visual point;

means (14) for determining projected figures each by projecting each group of the sectional lines from the visual point on one of the second planes corresponding to the group of the sectional lines; and

means (14) for determining the data representing the shape of the 3-dimensional object in the 3-dimensional coordinate system on the basis of the projected figures corresponding to the respective groups of the sectional lines.

11. An apparatus according to Claim 10, in which when said object is placed in a 3-dimensional space expressed in an XYZ coordinate system, said second planes include at least two groups of planes selected from a group of planes perpendicular to a Z axis, a group of planes perpendicular to an X axis, a group of planes perpendicular to a Y axis and a group of planes perpendicular to a straight line connecting said visual point and a selected point on said object.

12. An apparatus according to Claim 10, in which when said object is placed in a 3-dimensional space expressed in an XYZ coordinate system, said second planes include a group of planes perpendicular to a Z axis, a group of planes perpendicular to an X axis and a group of planes perpendicular to a Y axis.

14

# FIG. 1

```
        11                              16
┌──────────────────┐        ┌──────────────────┐
│ PERSPECTIVE      │───────→│ MOUSE  OR        │
│ VIEW  INPUT      │        │ ELECTRONIC       │
│ SECTION          │───┐    │ PEN              │
└──────────────────┘   │    └──────────────────┘
        │              │
        │              └───→┌──────────────────┐
        │                   │ KEYBOARD         │
        ↓  12               │                  │
┌──────────────────┐        └──────────────────┘
│ IMAGE            │                  │
│ PROCESSING       │─────────┐        17
│ SECTION          │         │
└──────────────────┘         │
        │                    │
        ↓  13                ↓  14              15
┌──────────────────┐  ┌──────────────────┐  ┌──────────────────┐
│ PLANE EQUATION   │  │ PROJECTION       │  │ OUTPUT           │
│ CALCULATION      │─→│ CALCULATION      │─→│ SECTION          │
│ SECTION          │  │ SECTION          │  │                  │
└──────────────────┘  └──────────────────┘  └──────────────────┘
```

# FIG. 2

START

INPUT TWO-DIMENSIONAL PERSPECTIVE VIEW ~1

CARRY OUT IMAGE PROCESSING ~2

EXTRACT SEGMENTS ~3

INPUT VANISHING POINT OR CALCULATION FROM PERSPECTIVE LINES ~4

CALCULATE VISUAL POINT ~5

CALCULATE THREE-DIMENSIONAL PLANE EQUATION ~6

INPUT/INDICATION TWO-DIMENSIONAL SECTIONAL SHAPE ~7

PROJECT SECTION ONTO THREE-DIMENSIONAL PLANE ~8

CARRY OUT INTERPOLATION AND CORRECTION ~9

CARRY OUT BEVELLING ~10

END

# FIG. 3

LEFT VANISHING POINT
LV($lv_x$, $lv_y$, O)

RIGHT VANISHING POINT
RV($lv_x$, $lv_y$, O)

21 CUBE

$P_H$ HORIZONTAL PLANE

$P_L$ LEFT VERTICAL PLANE

RIGHT VERTICAL $P_R$ PLANE

$P_F$ FRONT PLANE

Y

Z⊙ → X

MIDDLE VANISHING POINT
MV($mv_x$, $mv_y$, O)

20 PERSPECTIVE VIEW

17

# FIG. 4

LV($lv_x$, $lv_y$, O)

$P_H$ HORIZONTAL PLANE

~20

VISUAL POINT
F(O, O, f)

Y

Z ← ⊙ → X

MV($mv_x$, $mv_y$, O)

# FIG. 5

$P_R$ RIGHT VERTICAL PLANE

20 ~

VISUAL POINT
F(O, O, f)

$P_L$ LEFT VERTICAL PLANE

Z ← ⊙ Y

X

RV($rv_x$, $rv_y$, O)

## FIG. 6A

LL

LL LEFT VERTICAL SECTIONAL LINE

LH

LH HORIZONTAL SECTIONAL LINE

## FIG. 6B

LF FRONT SECTIONAL LINE

LH HORIZONTAL SECTIONAL LINE (BACK SIDE)

LH HORIZONTAL SECTIONAL LINE

## FIG. 6C

LH HORIZONTAL SECTIONAL LINE (BACK SIDE)

LH HORIZONTAL SECTIONAL LINE

LR RIGHT VERTICAL SECTIONAL LINE

# FIG. 7A

30 PERSPECTIVE VIEW

LF1 FRONT SECTIONAL LINE

PH1 HORIZONTAL PLANE

VISUAL POINT
F(O,O,f)

b1

Y

Z

X

a1

LH1
HORIZONTAL
SECTIONAL LINE

# FIG. 7B

30

F(O,O,f)

PH1

a1

b1
b2
b3
b4

a2

a3

LH1

a4

# FIG. 7C

30

PF1 FRONT PLANE

LF1

a5   a6

b5   b6

PH1

F(O,O,f)

b1

a1

a7

b7

# FIG. 8

LEFT VERTICAL SECTIONAL LINE $L_L$

RIGHT VERTICAL SECTIONAL LINE $L_R$

$L_R$

$L_R$

$L_H$

$L_H$

$L_L$

$L_H$ HORIZONTAL SECTIONAL LINE

# FIG. 9

FIG. 10

FIG. 11

FIG. 12

EP 0 596 518 A2

# FIG. 13

START

FORM PERSPECTIVE VIEW WITH SECTIONAL SHAPE (WITH SECTIONAL LINES CLASSIFIED BY COLORS) — 101

INPUT TWO-DIMENSIONAL PERSPECTIVE VIEW — 102

CARRY OUT IMAGE PROCESSING — 103

EXTRACT SEGMENTS — 104

INPUT PERSPECTIVE LINES AND CALCU-LATE VANISHING POINTS — 105

CALCULATE POINT VISUAL — 106

CALCULATE THREE-DIMENSIONAL PLANE EQUATION — 107

PROJECT SECTIONAL LINE ONTO THREE-DIMENSIONAL PLANE — 108

CARRY OUT INTERPOLATION AND CORRECTION — 109

OUTPUT BODY DATA — 110

END

24

FIG. 14

LEFT
SECTIONAL
LINE

RIGHT
SECTIONAL
LINE

HORIZONTAL
SECTIONAL
LINE

# FIG. 15

# FIG. 16

PERSPECTIVE VIEW
INPUT SECTION — 21

SECTIONAL SHAPE
INPUT SECTION

22

23

IMAGE PROCESSING
SECTION

PLANE EQUATION
CALCULATION
SECTION

24

25

PROJECTION
CALCULATION
SECTION

26 — OUTPUT SECTION

26

# FIG. 17

```
        START
          │
          ▼
┌─────────────────────┐
│ INPUT TWO-DIMENSION- │~201
│ AL PERSPECTIVE VIEW  │
└─────────────────────┘
          │
          ▼
┌─────────────────────┐
│ INPUT  SECTIONAL     │~202
│ SHAPE                │
└─────────────────────┘
          │
          ▼
┌─────────────────────┐
│ CARRY OUT  IMAGE     │~203
│ PROCESSING           │
└─────────────────────┘
          │
          ▼
┌─────────────────────┐
│ EXTRACT  SEGMENTS    │~204
└─────────────────────┘
          │
          ▼
┌─────────────────────┐
│ INPUT  PERSPECTIVE   │
│ LINES AND CALCULATE  │~205
│ VANISHING  POINTS    │
└─────────────────────┘
```

```
┌─────────────────────┐
│ CALCULATE  VISUAL    │~206
│ POINT                │
└─────────────────────┘
          │
          ▼
┌─────────────────────┐
│ CALCULATE            │
│ THREE-DIMENSIONAL    │~207
│ PLANE  EQUATION      │
└─────────────────────┘
          │
          ▼
┌─────────────────────┐
│ PROJECT SECTIONAL    │
│ LINES  ONTO          │~208
│ THREE-DIMENSIONAL    │
│ PLANE                │
└─────────────────────┘
          │
          ▼
┌─────────────────────┐
│ CARRY OUT            │
│ INTERPOLATION        │~209
│ AND  CORRCTION       │
└─────────────────────┘
          │
          ▼
┌─────────────────────┐
│ OUTPUT  BODY  DATA   │~210
└─────────────────────┘
          │
          ▼
         END
```

27

# FIG. 18

```
        31                          32
  ┌──────────────┐          ┌──────────────┐                      34
  │ PERSPECTIVE  │          │ VECTOR INPUT │          ┌──────────────┐
  │ VIEW INPUT   │─────────▶│ SECTION      │────┐     │ PROJECTION   │
  │ SECTION      │          │              │    │     │ CALCULATION  │
  └──────────────┘          └──────┬───────┘    │     │ SECTION      │
                                   │            │     └──────┬───────┘
                                   ▼            │            │
                            ┌──────────────┐    │            ▼
                            │ PLANE EQUATION│   └───▶ ┌──────────────┐
                            │ CALCULATION  │────────▶│              │
                            │ SECTION      │         │              │
                            └──────────────┘         └──────────────┘
                                   33                        │
                                                             ▼
                                          ┌──────────────┐
                                    35    │   OUTPUT     │
                                          │   SECTION    │
                                          └──────────────┘
```

# FIG. 19

```
        ┌───────────────┐
        │     START     │
        └───────┬───────┘
                │
                ▼
  ┌───────────────────────┐              ┌───────────────────────┐
  │ INPUT TWO-            │              │ CALCULATE THREE-      │
  │ DIMENSIONAL          │── 301        │ DIMENSIONAL PLANE     │── 305
  │ PERSPECTIVE          │              │ EQUATION              │
  │ VIEW                 │              └───────────┬───────────┘
  └───────────┬───────────┘                         │
              │                                      ▼
              ▼                          ┌───────────────────────┐
  ┌───────────────────────┐              │ PROJECT SECTIONAL     │
  │ INPUT SECTIONAL       │── 302        │ LINES ONTO THREE-     │── 306
  │ SHAPE                 │              │ DIMENSIONAL PLANE     │
  └───────────┬───────────┘              └───────────┬───────────┘
              │                                      │
              ▼                                      ▼
  ┌───────────────────────┐              ┌───────────────────────┐
  │ INPUT PEREPECTIVE     │              │ CARRY OUT             │
  │ LINES AND            │── 303        │ INTERPOLATION         │── 307
  │ CALCULATE            │              │ AND CORRECTION        │
  │ VANISHING POINTS     │              └───────────┬───────────┘
  └───────────┬───────────┘                         │
              │                                      ▼
              ▼                          ┌───────────────────────┐
  ┌───────────────────────┐              │ OUTPUT OBJECT         │── 308
  │ CALCULATE            │── 304        │ DATE                  │
  │ VISUAL POINT         │              └───────────┬───────────┘
  └───────────┬───────────┘                         │
              │                                      ▼
              └──────────────────────────┐  ┌───────────────┐
                                          │  │     END       │
                                          │  └───────────────┘
```

# FIG. 20

41

PERSPECTIVE
VIEW
INPUT SECTION

43

SECTIONAL
SHAPE
INSTRUCTION
SECTION

IMAGE
PROCESSING
SECTION

42

45

PLANE EQUATION
CALCULATION
SECTION

PROJECTION
CALCULATION
SECTION

44

OUTPUT
SECTION

46

EP 0 596 518 A2

# FIG. 21

```
        ┌─────────────┐                          ┌──────────────┐
        │    START    │                    ┌────►│  CALCULATE   │~406
        └──────┬──────┘                    │     │ VISUAL POINT │
               │                           │     └──────┬───────┘
               ▼                           │            ▼
  ┌────────────────────┐            ┌──────────────────────────┐
  │   INPUT  TWO-      │            │       CALCULATE           │~407
  │   DIMENSIONAL      │~401        │  THREE-DIMENSIONAL        │
  │   VIEW  WITH       │            │   PLANE EQUATION          │
  │ SECTIONAL  LINES   │            └────────────┬──────────────┘
  └─────────┬──────────┘                         ▼
            ▼                        ┌──────────────────────────┐
  ┌────────────────────┐            │  PROJECT SECTIONAL        │~408
  │    CARRY  OUT       │~402        │     LINES  ONTO           │
  │  IMAGE PROCESSING   │            │ THREE-DIMENSIONAL         │
  └─────────┬──────────┘            │       PLANE               │
            ▼                        └────────────┬──────────────┘
  ┌────────────────────┐                         ▼
  │     EXTRACT         │~403        ┌──────────────────────────┐
  │    SEGMENTS         │            │      CARRY  OUT           │~409
  └─────────┬──────────┘            │   INTERPOLATION           │
            ▼                        │  AND  CORRECTION          │
  ┌────────────────────┐            └────────────┬──────────────┘
  │    INDICATION       │~404                     ▼
  │  OF  SECTIONAL      │            ┌──────────────────────────┐
  │     SHAPE           │            │       OUTPUT             │~410
  └─────────┬──────────┘            │       OBJECT             │
            ▼                        │        DATA             │
  ┌────────────────────┐            └────────────┬──────────────┘
  │ INPUT PERSPECTIVE   │                         ▼
  │   LINES  AND        │~405              ┌─────────────┐
  │   CALCULATE         │                  │    END      │
  │ VANISHING POINTS    │                  └─────────────┘
  └─────────┬──────────┘
            └──────────────────────────────┘
```

30

# FIG. 22

51

PERSPECTIVE
VIEW INPUT
SECTION

53

IMAGE
PROCESSING
SECTION

SECTIONAL SHAPE
INSTRUCTION
SECTION

52

55

PLANE EQUATION
CALCULATION
SECTION

PROJECTION
CALCULATION
SECTION

54

OUTPUT
SECTION

56

EP 0 596 518 A2

# FIG. 23

START

INPUT TWO-DIMENSIONAL PERSPECTIVE VIEW ~501

INDICATION OF SECTIONAL SHAPE ~502

CARRY OUT IMAGE PROCESSING ~503

EXTRACT SEGMENTS ~504

INPUT PERSPECTIVE LINES AND CALCULATE VANISHING POINTS ~505

CALCULATE VISUAL POINT ~506

CALCULATE THREE-DIMENSIONAL PLANE EQUATION ~507

PROJECT SECTIONAL LINES ONTO THREE-DIMENTIONAL PLANE ~508

CARRY OUT INTERPOLATION AND CORRECTION ~509

OUTPUT OBJECT DATA ~510

END

32